# EUROPÄISCHE PATENTANMELDUNG

(11) **EP 2 843 400 A1**
(43) Veröffentlichungstag der Anmeldung: **04.03.2015**
(21) Anmeldenummer: 13182806.3
(22) Anmeldetag: 03.09.2013
(51) Int. Cl.: G01N 27/90, G01L 1/12

(54) **Sensoranordnung und Verfahren zur Bestimmung der mechanischen Oberflächenspannungen und/oder des Gefügezustandes**

(71) Anmelder: Siemens Aktiengesellschaft, 80333 München (DE)
(72) Erfinder: Brummel, Hans-Gerd, 13465 Berlin (DE); Pfeifer, Uwe, 12557 Berlin (DE)

(57) **Zusammenfassung**

Die Erfindung betrifft eine Sensoranordnung zur Erfassung von Oberflächenspannungen und/oder des Gefügezustandes eines ferromagnetischen Werkstücks, wobei zumindest ein erstes Basisspulensystem mit einer ersten Richtung und einer ersten Richtungssensitivität vorgesehen ist, zumindest ein zweites Basisspulensystem mit einer zweiten Richtung und einer zweiten Richtungssensitivität vorgesehen ist, zumindest ein drittes Basisspulensystem mit einer dritten Richtung und einer dritten Richtungssensitivität vorgesehen ist, und wobei zumindest das erste Basisspulensystem und das zweite Basisspulensystem einen ersten Differenzwinkel und das zweite Basisspulensystem und das dritte Basisspulensystem einen zweiten Differenzwinkel ausbilden, und wobei das erste Basisspulensystem außerhalb der zweiten Richtungssensitivität und der dritten Richtungssensitivität, das zweite Basisspulensystem außerhalb der ersten Richtungssensitivität und der dritten Richtungssensitivität und des dritten Basisspulensystems außerhalb der ersten Richtungssensitivität und der zweiten Richtungssensitivität angeordnet ist, so dass die mechanischen Oberflächenspannungen des Werkstücks zumindest teilweise ermittelbar sind.

Weiterhin betrifft die Erfindung ein Verfahren zur Bestimmung der mechanischen Oberflächenspannungen.

## Beschreibung

Die Erfindung betrifft eine Sensoranordnung zur Erfassung von Oberflächenspannungen und/oder des Gefügezustandes eines ferromagnetischen Werkstücks und ein Verfahren zur Bestimmung der mechanischen Oberflächenspannungen und/oder des Gefügezustandes.

Die Bestimmung des Oberflächenspannungszustandes und/oder des Gefügezustandes stellt eine wichtige Aufgabe bei der Überwachung der Beanspruchung mechanischer Werkstücke dar. Hierzu existieren verschiedene Messverfahren. Eines der am häufigsten angewandten Verfahren arbeitet mit Dehnmessstreifen, die zu diesem Zweck am Messpunkt auf der Oberfläche mit einem aufwendigen Verfahren aufgebracht werden müssen. Bei bewegten Werkstücken ist zusätzlich eine Telemetrieanlage zur aktiven Speisung und Messwertübertragung erforderlich. Desweiteren sind auch berührungslos arbeitende optische Verfahren bekannt. Beides ist jedoch sehr aufwendig.

Es ist daher eine erste Aufgabe der Erfindung eine Sensoranordnung anzugeben, welche das oben genannte Problem löst. Eine weitere Aufgabe ist die Angabe eines Verfahrens zur Bestimmung der mechanischen Oberflächenspannungen und/oder des Gefügezustandes eines ferromagnetischen Werkstücks.

Erfindungsgemäß wird die erste Aufgabe mit der Angabe einer Sensoranordnung zur Erfassung von Oberflächenspannungen und/oder des Gefügezustandes eines ferromagnetischen Werkstücks gelöst, wobei:
- zumindest ein erstes Basisspulensystem mit einer ersten Richtung und einer ersten Richtungssensitivität vorgesehen ist,
- zumindest ein zweites Basisspulensystem mit einer zweiter Richtung und einer zweiten Richtungssensitivität vorgesehen ist,
- zumindest ein drittes Basisspulensystem mit einer dritten Richtung und einer dritten Richtungssensitivität vorgesehen ist,
- und wobei zumindest das erste Basisspulensystem und das zweite Basisspulensystem einen ersten Differenzwinkel und das zweite Basisspulensystem und das dritte Basisspulensystem einen zweiten Differenzwinkel ausbilden,
- und wobei das erste Basisspulensystem außerhalb der zweiten Richtungssensitivität und der dritten Richtungssensitivität, das zweite Basisspulensystem außerhalb der ersten Richtungssensitivität und der dritten Richtungssensitivität und das dritte Basisspulensystem außerhalb der ersten Richtungssensitivität und der zweiten Richtungssensitivität angeordnet ist, so dass die mechanischen Oberflächenspannungen des Werkstücks zumindest teilweise ermittelbar sind.

Die vorgeschlagene Erfindung basiert auf der Anwendung einer speziell gestalteten und angeordneten Sensoranordnung aus mehreren Basisspulensystemen. Ein nachgeschalteter Rechenalgorithmus bestimmt den Betrag und die Richtung der einwirkenden mechanischen Oberflächenspannungen. Zur richtungsabhängigen Bestimmung der Permeabilität und damit des mechanischen Spannungszustandes ist auch eine möglichst richtungsempfindliche magnetische Durchflutung der Werkstückoberfläche erforderlich. Die Erfassung der mechanischen Spannungen erfolgt dabei berührungslos, d.h. die Sensoranordnung kommt nicht in direkten Kontakt mit der Oberfläche. Es müssen auch keine Hilfsmittel auf die Oberfläche aufgebracht werden und es muss keine Bearbeitung der Werkstückoberfläche erfolgen, sofern eine bestimmte Rauhigkeit bzw. Ebenheit in Bezug zur Sensoranordnung gegeben ist. Die Sensoranordnung ist in der Lage, den Hauptspannungszustand im Messpunkt zu ermitteln. Aus dem Hauptspannungszustand können danach die Vektorkomponenten der Zug- bzw. Druckspannungen und die Schubspannungen in beliebigen Orientierungsrichtungen berechnet werden. Die Sensoranordnung kann vorteilhafterweise auch an bewegten Werkstücken, also z.B. an rotierenden Wellen angewandt werden. Die Erfindung erlaubt ein berührungsloses und applikationsfreies Messprinzip, durch welches sehr viele Messpunkte an einem Werkstück innerhalb kurzer Zeit vermessen werden können, oder sogar eine Oberflächenkartierung erfolgen kann. Selbstverständlich kann die Sensoranordnung auch noch weitere Basisspulensysteme umfassen. Durch die Verwendung von mehr als drei solchen Basisspulensystemen können zusätzliche Redundanzen erzeugt werden, oder z.B. auch Plausibilitätsprüfungen durchgeführt werden.

Bevorzugt umfasst ein Basisspulensystem zumindest eine Erregerspule und eine Empfängerspule. Dies ist eine sehr einfache Ausführung eines Basisspulensystems.

In bevorzugter Ausgestaltung weist die Erregerspule als auch die Empfängerspule einen Spulenkern mit einem Spulenkerndurchmesser auf. Die Richtungssensitivität ist nun durch das Verhältnis des Abstandes der beiden Spulenkerne und/oder durch das Verhältnis der beiden Spulenkerndurchmesser gegeben.

Aus dem Verhältnis des Durchmessers und des Abstandes der Spulenkerne ergibt sich die Richtungsempfindlichkeit der Anordnung. Kleine Kerndurchmesser und große Kernabstände ergeben eine sehr richtungsempfindliche Sensoranordnung. Allerdings muss bei großen Kernabständen beachtet werden, dass im Einflussgebiet eine inhomogene Spannungsverteilung bestehen kann, die dann durch das Spulensystem quasi integriert, d.h. in der Fläche gemittelt wird. Bei der Dimensionierung des Spulensystems ist es daher von Vorteil, einen Kompromiss zwischen Richtungssensitivität und räumlicher Auflösung anzustreben.

In bevorzugter Ausgestaltung umfasst das erste Basisspulensystem und/oder das zweite Basisspulensystem und/oder das dritte Basisspulensystem eine Erregerspule und eine Empfängerspule, welche auf einen U-Ferritkern angeordnet sind. Bevorzugt umfasst das erste Basisspulensystem und/oder das zweite Basisspulensystem und/oder das dritte Basisspulensystem eine Erregerspule und eine erste Empfängerspule und eine zweite Empfängerspule, welche auf einem U-Ferritkern und/oder EI-Ferritkern angeordnet sind, wobei die Erregerspule zwischen, insbesondere zentral zwischen, der ersten Empfängerspule und der zweiten Empfängerspule angeordnet ist. Selbstverständlich können auch andere Anordnungen möglich sein.

Bevorzugt weisen zumindest zwei Erregerspulen der drei Basisspulensysteme eine Reihenschaltung auf. Neben dem Abgleich der Empfangsspulensysteme ist dabei besonders auf eine identische Erregung zu achten. Durch eine z.B. elektrische Reihenschaltung der Erregerspulen wird nun bei der elektrischen Verschaltung des ersten Basisspulensystems und des zweiten Basisspulensystems und des dritten Basisspulensystems eine möglichst gleiche Empfindlichkeit erreicht. Es sind auch andere elektrische oder elektronische Maßnahmen möglich, um eine möglichst gleiche Empfindlichkeit der verschiedenen Basisspulensysteme zu erreichen.

Neben der Anordnung von separaten Basisspulensystemen mit unterschiedlichem Ferritkern können diese Basisspulensysteme auch auf einem Ferritkern vereint werden, z.B. auf einer Verbundspule. Dazu ist allerdings die Verlagerung der Anordnungsgeometrie in die Gestalt des Ferritkerns (bzw. allgemein des Spulenkerns) notwendig. Dies bedeutet, dass die vorher in drei Basisspulensystemen realisierte Funktionalität, nämlich die magnetische Durchflutung eines Oberflächenbereiches in mindestens drei verschiedenen Richtungen, nun mit nur einem Spulenträger bzw. Ferritkern realisiert wird.

Bevorzugt sind die zumindest drei Basisspulensysteme durch ein Verbundspulensystem gegeben, welches als ein erstes Basisspulensystem eine Verbunderregerspule und eine erste Verbundempfängerspule umfasst, als ein zweites Basisspulensystem die Verbunderregerspule und eine zweite Verbundempfängerspule und als ein drittes Basisspulensystem die Verbunderregerspule und eine dritte Verbundempfängerspule sowie eine weitere, vierte Verbundempfängerspule und wobei die Verbunderregerspule und die vier Verbundempfängerspulen auf einem gemeinsamen Ferritkern angeordnet sind. Bevorzugt weisen weiterhin die vier Empfängerspulen den gleichen Abstand zur Verbunderregerspule auf, wobei jeweils benachbarte Empfängerspulen im gleichen Abstand zueinander angeordnet sind. Das hat neben einer symmetrischen Anordnung auch den Vorteil einfacher Gleichungssysteme, welche für die Berechnung der Oberflächenspannung günstig ist. Außerdem kompensieren sich auf diese Weise Unsymmetrien in der Herstellung der Sensoranordnung.

Bevorzugt sind die zumindest drei Basisspulensysteme durch ein Verbundspulensystem gegeben, welches als ein erstes Basisspulensystem eine Verbunderregerspule und eine erste Verbundempfängerspule umfasst, als ein zweites Basisspulensystem die Verbunderregerspule und eine zweite Verbundempfängerspule und als ein drittes Basisspulensystem die Verbunderregerspule und eine dritte Verbundempfängerspule und wobei die drei Verbundempfängerspulen sowie die Verbunderregerspule auf einem gemeinsamen Ferritkern angeordnet sind. In bevorzugter Ausgestaltung weisen die drei Verbundempfängerspulen den gleichen Abstand zur Verbunderregerspule auf, wobei jeweils benachbarten Empfängerspulen im gleichen Abstand zueinander angeordnet sind. In bevorzugter Ausgestaltung sind die zumindest drei Basisspulensysteme durch ein Verbundspulensystem gegeben, welches als ein erstes Basisspulensystem eine Verbunderregerspule und eine erste Verbundempfängerspule umfasst, als ein zweites Basisspulensystem die Verbunderregerspule und eine zweite Verbundempfängerspule und als ein drittes Basisspulensystem die Verbunderregerspule sowie eine dritte Verbundempfängerspule, eine vierte Verbundempfängerspulen, eine fünfte Verbundempfängerspule und eine sechste Verbundempfängerspule und wobei die sechs Verbundempfängerspulen sowie die Verbunderregerspule auf einem gemeinsamen Ferritkern angeordnet sind. Bevorzugt weisen die sechs Verbundempfängerspulen den gleichen Abstand zur Verbunderregerspule auf, wobei jeweils benachbarte Empfängerspulen im gleichen Abstand zueinander angeordnet sind. Das hat -wie oben- neben einer symmetrischen Anordnung auch den Vorteil einfacher Gleichungssysteme, welche für die Berechnung der Oberflächenspannung günstig sind. Außerdem kompensieren sich auf diese Weise Unsymmetrien in der Herstellung der Sensoranordnung. Auch hier sind alle Verbundspulen auf einem gemeinsamen Ferritkern angeordnet.

Die Empfangsspulen dieser Verbundsysteme sind im Falle mehrerer Spulen pro Richtungssystem vorzugsweise in Reihenschaltung zu betreiben.

Die separaten Basisspulensysteme und/oder die einer Orientierungsrichtung zugeordneten Spulensysteme auf dem gemeinsamen Ferritkern sind in bestimmten Differenzwinkelorientierungen zueinander angeordnet.

Bevorzugt ist der erste Differenzwinkel gleich dem zweiten Differenzwinkel und beträgt insbesondere 45 Grad. Alternativ betragen der erste Differenzwinkel und der zweite Differenzwinkel 60 Grad. Auch können der erste Differenzwinkel und der zweite Differenzwinkel 120 Grad betragen. Auch hier ist neben einer symmetrischen Anordnung auch der Vorteil einfacher Gleichungssysteme für eine anschließende Bestimmung der Oberflächenspannung des Werkstücks zu nennen. Zudem kompensieren sich auf diese Weise auch hier bestimmte Unsymmetrien in der Herstellung der Sensoranordnung. Ebenso sind beliebige Differenzwinkel möglich.

Die Spulenachse ist dadurch definiert, dass diese in der Mitte der Spule senkrecht durch eine Ebene verläuft, welche von den Windungen der Spule gebildet wird. Die Anordnung der Basisspulensysteme und/oder des Verbundspulensystems in Bezug zur Oberfläche der Werkstückes wird dabei so gewählt, dass eine orthogonale Ausrichtung der Spulenachsen zur Werkstückoberfläche erreicht wird, d.h. die offenen Querschnitte der Spulenschenkel sind parallel zur Werkstückoberfläche. Dabei weist die Sensoranordnung zu dieser Oberfläche des ferromagentischen Werkstücks einen Nennabstand auf, wobei zumindest das erste Basisspulensystem und das zweite Basisspulensystem und das dritte Basisspulensystem in Richtung untereinander einen Abstand von maximal 20% dieses Nennabstands aufweist. Besitzt die Sensoranordnung jedoch eine robuste Abstandskompensation, kann dieser Wert selbstverständlich auch höher sein. Die Sensoranordnung kann zudem an allen Punkten der Werkstückoberfläche in geringem Abstand positioniert werden.

In bevorzugter Ausgestaltung ist zumindest das erste Basisspulensystem als auch das zweite Basisspulensystem als auch das dritte Basisspulensystem an einer geeigneten Haltevorrichtung angeordnet. Dies erleichtert die Handhabung.

Die auf das Verfahren bezogene zweite Aufgabe wird durch die Angabe eines Verfahrens zur Bestimmung der mechanischen Oberflächenspannungen und/oder des Gefügezustandes eines ferromagnetischen Werkstücks durch die folgenden Schritte gelöst:
- Bestimmung von drei unabhängigen Messwerten durch eine Sensoranordnung nach einem der vorhergehenden Ansprüche,
- Ermittlung der richtungsabhängigen Permeabilität durch einen Rechenalgorithmus in einem bestimmten Messpunkt.

Mit dem Verfahren wird eine richtungsempfindliche magnetische Durchflutung der Werkstückoberfläche zur richtungsabhängigen Bestimmung der Permeabilität und damit des mechanischen Spannungszustandes ermöglicht. Die darauffolgende Ermittlung des mechanischen Spannungszustandes wird durch die Anwendung des magnetoelastischen Effektes ermöglicht. Die Erfassung der mechanischen Spannungen erfolgt mit diesem Verfahren berührungslos, d.h. die Sensoranordnung kommt nicht in direkten Kontakt mit der Oberfläche. Es müssen auch keine Hilfsmittel auf die Oberfläche aufgebracht werden und es muss keine Bearbeitung der Werkstückoberfläche erfolgen. Das vorgeschlagene Verfahren arbeitet somit berührungslos und applikationsfrei, d.h. die Messung kann an beliebigen Oberflächenpunkten des Werkstücks erfolgen, ohne dass dort Vorrichtungen angebracht werden müssen. Das berührungslose und applikationsfreie Verfahren erlaubt es somit, dass sehr viele Messpunkte an einem Objekt innerhalb kurzer Zeit vermessen werden können, oder sogar eine Oberflächenkartierung erfolgen kann.

Bevorzugt werden mehrere Messpunkte des Werkstücks bestimmt und daraus eine Bestimmung einer richtungsabhängigen Permeabilität ermöglicht wird, und so eine Kartierung des Eigenspannungstensors erfolgt.

Weitere Merkmale, Eigenschaften und Vorteile der vorliegenden Erfindung ergeben sich aus der nachfolgenden Beschreibung unter Bezugnahme auf die beiliegenden Figuren. Darin zeigt schematisch:
- FIG 1: ein erstes Beispiel eines einzelnen Basisspulensystems mit zugeordnetem Werkstück,
- FIG 2: ein zweites Beispiel eines einzelnen Basisspulensystems mit zugeordnetem Werkstück,
- FIG 3: ein drittes Beispiel eines einzelnen Basisspulensystems mit zugeordnetem Werkstück,
- FIG 4: schematische Darstellung (Draufsicht) der Basisspulensysteme aus Fig.3, Fig.2, Fig.1,
- FIG 5: ein erstes Beispiel einer erfindungsgemäßen Sensoranordnung mit Differenzwinkel 45°,
- FIG 6: ein zweites Beispiel einer erfindungsgemäßen Sensoranordnung mit Differenzwinkel 60°,
- FIG 7: ein drittes Beispiel einer erfindungsgemäßen Sensoranordnung mit Differenzwinkel 120°,
- FIG 8: als viertes Beispiel einer erfindungsgemäßen Sensoranordnung ein erstes Verbundspulensystem,
- FIG 9: als fünftes Beispiel einer erfindungsgemäßen Sensoranordnung ein zweites Verbundspulensystem,
- FIG 10: als sechstes Beispiel einer erfindungsgemäßen Sensoranordnung ein drittes Verbundspulensystem.

An mechanisch beanspruchten Werkstücken prägt sich durch die einwirkenden Kräfte und Momente ein mehrachsiger Spannungszustand aus, der in einer infinitesimal dünnen Oberflächenschicht als zweidimensional betrachtet werden kann. Die Bestimmung des richtungsabhängigen Spannungszustandes erfolgt mit Hilfe des magnetoelastischen Effektes. Dieser Effekt bildet einen Zusammenhang ab zwischen mechanischen Eigenschaften (mechanischer Spannungszustand) und einer magnetischen Materialeigenschaft, der Permeabilität.

Die vorgeschlagene Erfindung basiert auf der Anwendung einer speziell gestalteten und angeordneten Sensoranordnung aus mehreren Basisspulensystemen. Ein nachgeschalteter Rechenalgorithmus bestimmt den Betrag und die Richtung der einwirkenden mechanischen Oberflächenspannungen. Zur richtungsabhängigen Bestimmung der Permeabilität und damit des mechanischen Spannungszustandes ist auch eine möglichst richtungsempfindliche magnetische Durchflutung der Werkstückoberfläche erforderlich.

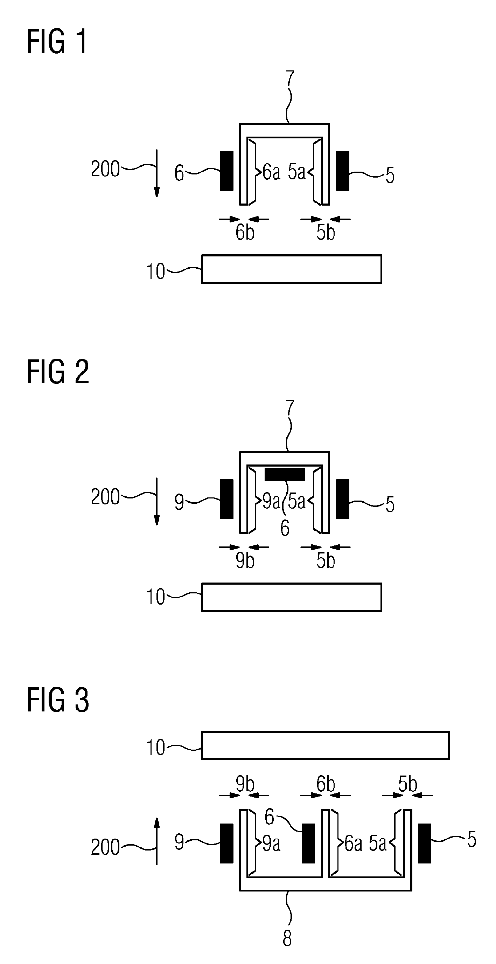

FIG 1 zeigt ein erstes Beispiel eines Basisspulensystems. Dieses umfasst zumindest eine Erregerspule 6 und eine Empfängerspule 5. Dabei sind die Erregerspule 6 und die Empfängerspule 5 auf einem gemeinsamen U-Ferritkern 7 angeordnet. Die Empfängerspule 5 umfasst einen Spulenkern 5a mit einem Spulenkerndurchmesser 5b und die Erregerspule 6 umfasst ebenfalls einen Spulenkern 6a mit einem Spulenkerndurchmesser 6b. Dabei kann der Spulenkern 5a und der Spulenkern 6a auf den Schenkeln des U-Ferritkerns angeordnet sein. Durch das Verhältnis des Abstandes des Spulenkerns 6a und des Spulenkerns 5a sowie durch das Verhältnis des Spulenkerndurchmessers 6b und des Spulenkerndurchmessers 5b wird die Richtungssensitivität vorgegeben.

FIG 2 zeigt ein zweites Beispiel eines weiteren Basisspulensystems. Dieses umfasst eine Erregerspule 6, eine erste Empfängerspule 5 und eine zweite Empfängerspule 9, welche auf einem U-Ferritkern 7 angeordnet sind. Die Erregerspule 6 ist zentral zwischen der ersten Empfängerspule 5 und der zweiten Empfängerspule 9 angeordnet. Dabei sind die beiden Empfängerspulen 5,9 auf den Schenkeln des U-Ferritkerns 7 angeordnet.

FIG 3 zeigt ein drittes Beispiel eines weiteren Basisspulensystems. Dieses umfasst eine Erregerspule 6, eine erste Empfängerspule 5 und eine zweite Empfängerspule 9, welche auf einem E-Ferritkern 8 angeordnet sind. Dabei ist die Erregerspule 6 zentral zwischen der ersten Empfängerspule 5 und der zweiten Empfängerspule 9 angeordnet. Dabei sind die beiden Empfängerspulen 5,9 als auch die Erregerspule 6 auf den Schenkeln des E-Ferritkerns 8 angeordnet.

Selbstverständlich können auch andere Ferritkerne, insbesondere EI-Ferritkerne, oder auch C - Ferritkerne etc. herangezogen werden. Die dargestellten Basisspulensysteme sind somit nur beispielhaft und dienen dem Verständnis.

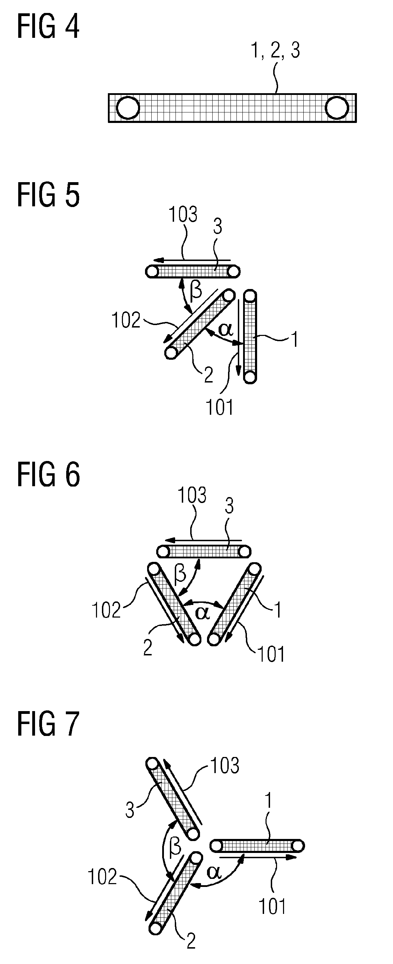

Das Basisspulensystem der Figuren 1,2 oder 3 wird nachfolgend - wie in Figur 4 gezeigt - schematisch einheitlich als schraffierter Balken dargestellt. Dabei kann der Balken je mit 1,2 oder 3 nummeriert sein, je nachdem ob es sich um das erste Basisspulensystem, das zweite Basisspulensystem oder das dritte Basisspulensystem handelt. Das bedeutet, dass für einen schraffierten Balken in den nachfolgenden Figuren jeweils eines der oben beschriebenen Basisspulensysteme eingesetzt werden kann. Auch sind selbstverständlich andere Basisspulensysteme, z.B. auf einen EI-Ferritkern, welche nicht ausdrücklich beschrieben oder aufgeführt werden, einsetzbar.

FIG 5 zeigt sehr schematisch ein erstes Beispiel einer ersten erfindungsgemäßen Sensoranordnung zur Erfassung von Oberflächenspannungen. Die Sensoranordnung besteht aus zumindest einem ersten Basisspulensystem 1 und mit einer ersten Richtung 101 und einer ersten Richtungssensitivität. Dabei kann als erstes Basisspulensystem 1 eines der oben genannten Basisspulensysteme verwendet werden. Selbstverständlich können auch Basisspulensysteme mit EI-Ferritkern etc. verwendet werden.

Weiterhin umfasst die Sensoranordnung zumindest ein zweites Basisspulensystem 2 mit einer zweiter Richtung 102 und einer zweiten Richtungssensitivität. Weiterhin umfasst die Sensoranordnung zumindest ein drittes Basisspulensystem 3 mit einer dritten Richtung 103 und einer dritten Richtungssensitivität. Das erste Basisspulensystem 1 und das zweite Basisspulensystem 2 bilden einen ersten Differenzwinkel α und das zweiten Basisspulensystem 2 und das dritte Basisspulensystem 3 einen zweiten Differenzwinkel β aus. Dabei entsprechen die Basisspulensysteme 1,2,3 jeweils einem der Basisspulensysteme der Figuren 1,2 oder 3.

Dabei bilden die erste Richtung 101 und die zweite Richtung 102 und die dritte Richtung 103 jeweils einen Differenzwinkel α,β mit α,β größer 0 Grad aus. Zudem sind die Richtungen 101, 102, 103 so angeordnet, dass das erste Basisspulensystem 1 außerhalb der zweiten und der dritten Richtungssensitivität, das zweite Basisspulensystem 2 außerhalb der ersten und der dritten Richtungssensitivität, und das dritte Basisspulensystem 3 außerhalb der ersten und der zweiten Richtungssensitivität angeordnet ist.

Im Beispiel der FIG 5 hat das erste Basisspulensystem 1 und das zweite Basisspulensystem 2 zudem einen Differenzwinkel α und das zweite Basisspulensystem 2 und das dritte Basisspulensystem 3 einen Differenzwinkel β, wobei der erste Differenzwinkel α und der zweite Differenzwinkel β jeweils 45 Grad aufweisen. Dabei können die drei Basisspulensysteme 1, 2, 3 auf einer Halteanordnung (nicht gezeigt) angebracht sein.

FIG 6 zeigt ein zweites Beispiel einer zweiten erfindungsgemäßen Sensoranordnung mit erfindungsgemäßen Basisspulensystemen in der das erste Basisspulensystem 1 und das zweite Basisspulensystem 2 einen ersten Differenzwinkel α und das zweite Basisspulensystem 2 und das dritte Basisspulensystem 3 einen zweiten Differenzwinkel β aufweisen, wobei der erste Differenzwinkel α und der zweite Differenzwinkel β 60 Grad sind. Dabei kann als jeweiliges Basisspulensystem eines der oben genannten Basisspulensysteme verwendet werden. Selbstverständlich können auch Basisspulensysteme mit EI-Ferritkern etc. verwendet werden. Auch hier liegen die Richtungssensitivitäten eines jeweiligen Basisspulensystems außerhalb der anderen beiden Richtungssensitivitäten der beiden anderen Basisspulensysteme.

FIG 7 zeigt ein drittes Beispiel einer dritten erfindungsgemäßen Sensoranordnung mit erfindungsgemäßen Basisspulensystemen in der das erste Basisspulensystem 1 und das zweite Basisspulensystem 2 einen ersten Differenzwinkel α und das zweite Basisspulensystem 2 und das dritte Basisspulensystem 3 einen zweiten Differenzwinkel β aufweisen, und wobei der erste Differenzwinkel α und der zweite Differenzwinkel β 120 Grad sind. Dabei kann als Basisspulensystem 1,2 oder 3 eines der oben genannten Basisspulensysteme verwendet werden. Selbstverständlich können auch Basisspulensysteme mit EI-Ferritkern etc. verwendet werden. Auch hier liegen die Richtungssensitivitäten eines jeweiligen Basisspulensystems außerhalb der anderen beiden Richtungssensitivität der beiden anderen Basisspulensysteme.

Die Anordnung im Differenzwinkel von beispielsweise 45 Grad, 60 Grad, 90 Grad (nicht gezeigt) oder 120 Grad hat neben der Symmetrie auch den Vorteil einfacher Gleichungssysteme, welche für die Bestimmung der Oberflächenspannung günstig sind. Zudem kompensieren sich auf diese Weise gegebenenfalls Unsymmetrien, welche in der Herstellung oder der Handhabung der Sensoranordnung liegen.

Dabei kann als Basisspulensystem jedes der oben beschriebenen Basisspulensysteme herangezogen werden, die selbstverständlich auch noch untereinander kombiniert werden können. Auch die nicht-erwähnten Basisspulensysteme die z.B. auf einem C-Kern oder EI-Kern angeordnet sind, können selbstverständlich herangezogen werden.

Aus dem Verhältnis des Durchmessers und des Abstandes der Spulenkerne 6a, 5a, 9a ergibt sich die Richtungsempfindlichkeit der Anordnung. Kleine Kerndurchmesser und große Kernabstände ergeben eine sehr richtungsempfindliche Sensoranordnung. Allerdings muss bei großen Kernabständen beachtet werden, dass im Einflussgebiet eine inhomogene Spannungsverteilung besteht, die dann durch das Spulensystem quasi integriert, d.h. in der Fläche gemittelt wird. Bei der Dimensionierung des Spulensystems ist daher ein Kompromiss zwischen Richtungssensitivität und räumlicher Auflösung anzustreben.

Bei der Veränderung von Gefügestrukturen des Werkstücks 10 (FIG 1, 2,3) verändert sich ebenfalls die Permeabilität des Materials, welche im Wesentlichen mit Hilfe des Eigenspannungstensors beschrieben werden kann. Wird die Permeabilität des Werkstücks 10 überwacht, insbesondere kontinuierlich überwacht, so kann durch die Änderung der richtungsgebundenen Permeabilität auf die Änderung des Gefüges des Werkstücks 10 geschlossen werden. Die Bestimmung eines ortsaufgelösten Eigenspannungstensors mit Hilfe des magnetoelastischen Messprinzips ermöglicht nun eine Erkennung von Materialeigenschaften bzw. ihrer Veränderungen. Dazu muss der vollständige Eigenspannungstensor ermittelt werden. Der Eigenspannungstensor enthält als Informationsparameter die Amplitude der Hauptspannungen und die Lage bzw. die Winkelorientierung des Hauptspannungssystems.

Dies kann mit der erfindungsgemäßen Sensoranordnung erreicht werden. Mit Hilfe dieser drei unabhängigen Messwerte können insbesondere entweder die drei Spannungskomponenten, oder die Kennwerte des Hauptspannungszustandes ermittelt werden, mit deren Hilfe wiederum der Eigenspannungstensor bestimmt werden kann. Bevorzugt wird die Oberfläche des Werkstücks 10 mit der Sensoranordnung überstrichen. Da sich die Permeabilität des Werkstücks 10 als eine Funktion der Beanspruchung ändert, kann sie für die Bestimmung der Beanspruchung und der Ermüdung eines Werkstücks herangezogen werden.

Die Erfassung der mechanischen Spannungen erfolgt dabei berührungslos, d.h. der Sensoranordnung kommt nicht in direkten Kontakt mit der Oberfläche des Werkstücks 10. Es müssen auch keine Hilfsmittel auf die Oberfläche aufgebracht werden und es braucht keine Bearbeitung der Werkstückoberfläche erfolgen, sofern eine bestimmte Rauigkeit bzw. Ebenheit in Bezug zur Sensorkopfgröße gegeben ist. Die erfindungsgemäße Sensoranordnung arbeitet berührungslos und applikationsfrei, d.h. die Messung kann an beliebigen Oberflächenpunkten des Werkstücks 10 erfolgen, ohne dass dort Vorrichtungen angebracht werden müssen. Die erfindungsgemäße Sensoranordnung kann an allen Punkten der Werkstückoberfläche 10 in geringem Abstand, insbesondere zwischen 0.5 mm und 1 mm, positioniert werden, sofern eine bestimmte Ebenheit der Oberfläche im Verhältnis zum Durchmesser der Sensoranordnung gegeben ist. Die maximale Abstandsdifferenz innerhalb der Basisspulensysteme 1,2,3 untereinander sollte nicht mehr als 20% des Nennabstandes in Richtung zu der Oberfläche 200 (FIG 1,2,3) betragen.

Zur zerstörungsfreien Prüfung von Materialeigenschaften kann die Sensoranordnung kontinuierlich das Werkstück 10 überstreichen; dabei kann sogar eine Oberflächenkartierung erfolgen.

Neben der Anordnung von separaten Basisspulensystemen können diese Basisspulensysteme auch auf einem Ferritkern vereint werden. Dazu ist allerdings die Verlagerung der Anordnungsgeometrie in die Gestalt des Ferritkerns (bzw. allgemein des Spulenkerns) notwendig, wie nachfolgend an einigen Beispielen gezeigt ist.

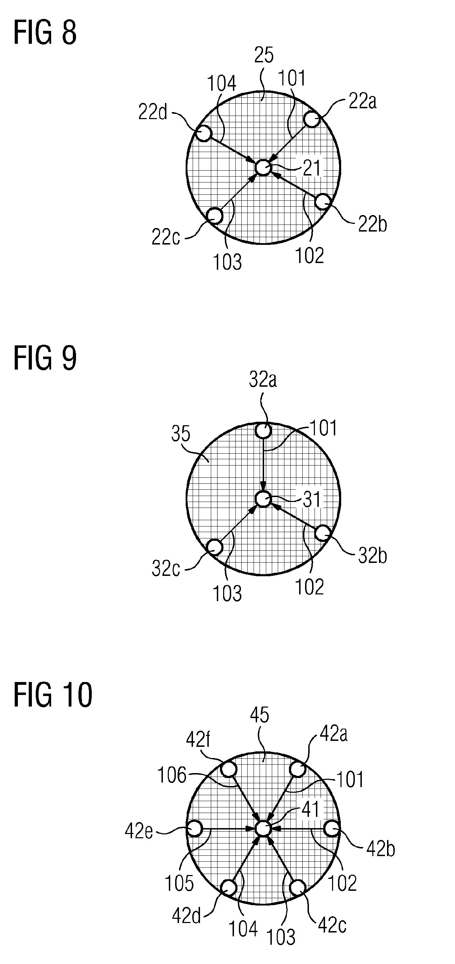

FIG 8 zeigt eine solche erste Sensoranordnung, welche durch ein Verbundspulensystem 20 gegeben ist. Diese hat als ein erstes Basisspulensystem eine Verbunderregerspule 21 und eine erste Verbundempfängerspule 22a mit einer ersten Richtung 101 und einer ersten Richtungssensitivität, als ein zweites Basisspulensystem die Verbunderregerspule 21 und eine zweite Verbundempfängerspule 22b, eine zweite Richtung 102 und eine zweite Richtungssensitivität. Ein drittes Basisspulensystem ist die Verbunderregerspule 21 und eine dritte Verbundempfängerspule 22c, eine dritte Richtung 103 sowie eine dritte Richtungssensitivität. Die Verbunderregerspule 21 und die vierte Verbundempfängerspule 22d stellen ein weiteres Basisspulensystem mit einer vierten Richtung 104 und einer vierten Richtungssensitivität dar, wobei die Verbunderregerspule 21 und die vier Verbundempfängerspulen 22a,b,c,d auf einem gemeinsamen Ferritkern 25 angeordnet sind. Dabei weisen die vier Verbundempfängerspulen 22a-d jeweils den gleichen Abstand zur Verbunderregerspule 21 auf und sind auch im gleichen Abstand zueinander angeordnet. Die vier Verbundempfängerspulen 22a-d sind in diesem Beispiel in einem Differenzwinkel von jeweils 90 Grad zueinander angeordnet. Eine fünfte Richtungssensitivität kann durch Auswertung der Signale der Verbundempfängerspulen 22a und 22b oder 22d und 22c erreicht werden. Eine sechste Richtungssensitivität kann durch Auswertung der Signale der Verbundempfängerspulen 22b und 22c oder 22a und 22d erreicht werden. Das gleiche Schema zur Erzeugung weiterer zusätzlicher Richtungssensitivitäten kann auch auf die im Folgenden erwähnten Verbundspulensysteme 30 und 40 angewandt werden.

FIG 9 zeigt eine solche zweite Sensoranordnung, welche durch ein zweites Verbundspulensystem 30 gegeben ist. Dieses umfasst als ein erstes Basisspulensystem eine Verbunderregerspule 31 und eine erste Verbundempfängerspule 32a mit einer ersten Richtung 101 und einer ersten Richtungssensitivität, und als ein zweites Basisspulensystem die Verbunderregerspule 31 und eine zweite Verbundempfängerspule 32b mit einer zweiten Richtung 102 und einer zweiten Richtungssensitivität sowie als ein drittes Basisspulensystem die Verbunderregerspule 31 und eine dritte Verbundempfängerspule 32c mit einer dritten Richtung 103 und einer dritten Richtungssensitivität und wobei die drei Verbundempfängerspulen 32a,b,c auf einem gemeinsamen Ferritkern 35 angeordnet sind. Dabei weisen die drei Verbundempfängerspulen 32a-c den gleichen Abstand zur Verbunderregerspule 31 auf und sind im gleichen Abstand zueinander angeordnet. Die drei Verbundempfängerspulen 32a-c sind in diesem Beispiel in einem Differenzwinkel von 120 Grad zueinander angeordnet.

FIG 10 zeigt eine solche dritte Sensoranordnung, welche durch ein drittes Verbundspulensystem 40 gegeben ist. Dieses umfasst als ein erstes Basisspulensystem eine Verbunderregerspule 41 und eine erste Verbundempfängerspule 42a mit einer ersten Richtung 101 und einer ersten Richtungssensitivität, als ein zweites Basisspulensystem die Verbunderregerspule 41 und eine zweite Verbundempfängerspule 42b mit einer zweiten Richtung 102 und einer zweiten Richtungssensitivität sowie als ein drittes Basisspulensystem die Verbunderregerspule 41 und eine dritte Verbundempfängerspule 42c mit einer dritten Richtung 103 und einer dritten Richtungssensitivität. Weiterhin umfasst diese Sensoranordnung als weiteres Basisspulensystem die Verbunderregerspule 41 und eine vierte Verbundempfängerspule 42d mit einer vierten Richtung 104 und einer vierten Richtungssensitivität. Zudem umfasst diese Sensoranordnung als weiteres Basisspulensystem die Verbunderregerspule 41 und eine fünfte Verbundempfängerspule 42e mit einer fünften Richtung 105 und einer fünften Richtungssensitivität. Zusätzlich umfasst diese Sensoranordnung als weiteres Basisspulensystem die Verbunderregerspule 41 und eine sechste Verbundempfängerspule 42f mit einer sechsten Richtung 106 und einer sechsten Richtungssensitivität. Dabei sind die sechs Verbundempfängerspulen 42a-f und die Verbunderregerspule 41 auf einem gemeinsamen Ferritkern 45 angeordnet. Dabei weisen die sechs Verbundempfängerspulen 42a-f den gleichen Abstand zur Verbunderregerspule 41 auf und sind im gleichen Abstand zueinander angeordnet. Die sechs Verbundempfängerspulen 42a-f weisen in diesem Beispiel einen Differenzwinkel von 60 Grad zueinander auf.

Selbstverständlich ist die Anzahl der Verbundempfängerspulen 22a-d, 32a-c, 42a-f nicht beschränkt, ebenso wenig wie die Anzahl der Verbunderregerspule 21,31,41. Wie oben schon erwähnt, haben die Anordnungen mit Differenzwinkeln von 45 Grad, 60 Grad, 90 Grad (nicht gezeigt), oder 120 Grad, neben einer symmetrischen Anordnung auch den Vorteil einfacher Gleichungssysteme, welche zur Berechnung günstig ist.

Durch die Verwendung von mehr als drei Basisspulensystemen wie bei den Verbundspulensystemen, können zusätzliche Redundanzen erzeugt werden, oder z.B. auch Plausibilitätsprüfungen durchgeführt werden.

Der Vorteil der Anwendung mehrerer Basisspulensysteme 1a-c besteht in der einfachen Herstellbarkeit und Verfügbarkeit von U-, E, EI oder anderen Kernformen, vorzugsweise Ferriten sowie der dazugehörigen Anordnung der Basisspulensysteme.

Bei der elektrischen Verschaltung dieser Basisspulensysteme muss darauf geachtet werden, für alle Basisspulensysteme eine möglichst gleiche Empfindlichkeit zu erreichen. Neben dem Abgleich der Empfängerspule ist dabei besonders auf eine identische Erregung zu achten. Das kann vorteilhaft durch eine elektrische Reihenschaltung der Erregerspulen sichergestellt werden. Die Empfängerspulen der dargestellten Beispiele sind im Falle mehrerer Basisspulensysteme in einer Richtung vorzugsweise in Reihenschaltung zu betreiben (U-Basisspulensystem, EI-Basisspulensystem, Verbundspulensysteme). In das Gleichungssystem des Mohrschen Spannungskreises sind zur Berechnung des Spannungstensors die für die verschiedenen Richtungen der Basisspulen zutreffenden Winkelorientierungen (bzw. Richtungen 101 bis 106) einzusetzen. Durch die Verwendung von mehr als drei solchen Basisspulensystemen können zusätzliche Redundanzen erzeugt werden, oder z.B. auch Plausibilitätsprüfungen durchgeführt werden.

Durch die Prüfung von Werkstücken 10 mit der erfindungsgemäßen Sensoranordnung können zerstörungsfrei Rückschlüsse auf deren Gefügeänderungen getroffen werden. Zudem ist die erfindungsgemäße Sensoranordnung mit dem erfindungsgemäßen Verfahren zur permanenten Überwachung von Werkstücken 10 in Anlagen geeignet. Somit lässt sich z.B. Ermüdung des Materials, bevor Schäden sichtbar werden, erkennen. Brüche oder Risse können somit vermieden werden. Die erfindungsgemäße Sensoranordnung und das erfindungsgemäße Verfahren arbeiten berührungslos und applikationsfrei, d.h. die Messung kann an beliebigen Oberflächenpunkten des Werkstücks 10 erfolgen, ohne dass dort Vorrichtungen angebracht werden müssen.

## Patentansprüche

1. Sensoranordnung zur Erfassung von Oberflächenspannungen und/oder des Gefügezustandes eines ferromagnetischen Werkstücks (10),
**dadurch gekennzeichnet, dass**
- zumindest ein erstes Basisspulensystem (1,22a,32a,42a) mit einer ersten Richtung (101) und einer ersten Richtungssensitivität vorgesehen ist,
- zumindest ein zweites Basisspulensystem (2,22b,32b,42b) mit einer zweiten Richtung (102) und einer zweiten Richtungssensitivität vorgesehen ist,
- zumindest ein drittes Basisspulensystem (3, 22c,32c,42c) mit einer dritten Richtung (103) und einer dritten Richtungssensitivität vorgesehen ist,
- und wobei zumindest das erste Basisspulensystem (1,22a,32a,42a) und das zweite Basisspulensystem (2,22b,32b,42b) einen ersten Differenzwinkel (α1) und das zweite Basisspulensystem (2,22b,32b,42b) und das dritte Basisspulensystem (3,22c,32c,42c) einen zweiten Differenzwinkel (β1) ausbilden,
- und wobei das erste Basisspulensystem (1,22a,32a,42a) außerhalb der zweiten Richtungssensitivität und der dritten Richtungssensitivität, das zweite Basisspulensystem (2,22b,32b,42b) außerhalb der ersten Richtungssensitivität und der dritten Richtungssensitivität und des dritten Basisspulensystems (3, 22c,32c,42c) außerhalb der ersten Richtungssensitivität und der zweiten Richtungssensitivität angeordnet ist, so dass die mechanischen Oberflächenspannungen des Werkstücks zumindest teilweise ermittelbar sind.

2. Sensoranordnung nach Anspruch 1,
**dadurch gekennzeichnet, dass**
ein Basisspulensystem zumindest eine Erregerspule (6) und eine Empfängerspule (5) umfasst.

3. Sensoranordnung nach Anspruch 2,
**dadurch gekennzeichnet, dass**
die Erregerspule (6) als auch die Empfängerspule (5) einen Spulenkern (5a,6a) mit einem Spulenkerndurchmesser (5b,6b) aufweist und die Richtungssensitivität durch das Verhältnis des Abstandes der beiden Spulenkerne (5a,6a) und/oder durch das Verhältnis der beiden Spulenkerndurchmesser (5b,6b) gegeben ist.

4. Sensoranordnung nach einem der Ansprüche 1-3,
**dadurch gekennzeichnet, dass**
das erste Basisspulensystem (1) und/oder das zweite Basisspulensystem (2) und/oder das dritte Basisspulensystem (3) eine Erregerspule (6) und eine Empfängerspule (5) umfasst, welche auf einem U-Ferritkern (7) angeordnet sind.

5. Sensoranordnung nach einem der Ansprüche 1-4,
**dadurch gekennzeichnet, dass**
das erste Basisspulensystem (1) und/oder das zweite Basisspulensystem (2) und/oder das dritte Basisspulensystem (3) eine Erregerspule (6) und eine erste Empfängerspule (5) und eine zweite Empfängerspule (9) umfasst, welche auf einem U-Ferritkern (7) angeordnet sind, wobei die Erregerspule (6) zwischen, insbesondere zentral zwischen, der ersten Empfängerspule (5) und der zweiten Empfängerspule (9) angeordnet ist.

6. Sensoranordnung nach einem der Ansprüche 1-5,
**dadurch gekennzeichnet, dass**
das erste Basisspulensystem (1) und/oder das zweite Basisspulensystem (2) und/oder das dritte Basisspulensystem (3) eine Erregerspule (6) und eine erste Empfängerspule (5) und eine zweite Empfängerspule (9) umfasst, welche auf einem E-Ferritkern (8) angeordnet sind, wobei die Erregerspule (6) insbesondere mittig zentral, zwischen der ersten Empfängerspule (5) und der zweite Empfängerspule (9) angeordnet ist.

7. Sensoranordnung nach einem der Ansprüche 2-6,
**dadurch gekennzeichnet, dass** von den drei Basisspulensystemen (1,2,3) zumindest zwei Erregerspulen (6) eine Reihenschaltung aufweisen.

8. Sensoranordnung nach einem der Ansprüche 1-7,
**dadurch gekennzeichnet, dass**
die zumindest drei Basisspulensysteme (1,2,3) durch ein Verbundspulensystem (20) gegeben sind,
welches als ein erstes Basisspulensystem eine Verbunderregerspule (21) und eine erste Verbundempfängerspule (22a) umfasst, als ein zweites Basisspulensystem die Verbunderregerspule (21) und eine zweite Verbundempfängerspule (22b) und als ein drittes Basisspulensystem die Verbunderregerspule (21) und eine dritte Verbundempfängerspule (22c) sowie eine weitere, vierte Verbundempfängerspule (22d) und wobei die Verbunderregerspule (21) und die vier Verbundempfängerspulen (22a,b,c,d) auf einem gemeinsamen Ferritkern (25) angeordnet sind.

9. Sensoranordnung nach Anspruch 8,
**dadurch gekennzeichnet, dass**
die vier Verbundempfängerspulen (22a-d) den gleichen Abstand zur Verbunderregerspule (21) aufweisen und jeweils benachbarten Verbundempfängerspulen (22a-d) im gleichen Abstand zueinander angeordnet sind.

10. Sensoranordnung nach einem der Ansprüche 1-7,
**dadurch gekennzeichnet, dass**
die zumindest drei Basisspulensysteme (1,2,3) durch ein Verbundspulensystem (30) gegeben sind, welches als ein erstes Basisspulensystem eine Verbunderregerspule (31) und eine erste Verbundempfängerspule (32a) umfasst, als eine zweite Basisspulensystem die Verbunderregerspule (31) und eine zweite Verbundempfängerspule (32b) und als ein drittes Basisspulensystem die Verbunderregerspule (31) und eine dritte Verbundempfängerspule (32c) und wobei die drei Verbundempfängerspulen (32a,b,c) und die Verbunderregerspule (31) auf einem gemeinsamen Ferritkern (35) angeordnet sind.

11. Sensoranordnung nach Anspruch 10,
**dadurch gekennzeichnet, dass**
die drei Verbundempfängerspulen (32a,b,c) den gleichen Abstand zur Verbunderregerspule (31) aufweisen und jeweils benachbarte Empfängerspulen (32a,b,c) im gleichen Abstand zueinander angeordnet sind.

12. Sensoranordnung nach einem der Ansprüche 1-7,
**dadurch gekennzeichnet, dass**
die zumindest drei Basisspulensysteme (1,2,3) durch ein Verbundspulensystem (40) gegeben sind, welches als ein erstes Basisspulensystem eine Verbunderregerspule (41) und eine erste Verbundempfängerspule (42a) umfasst, als ein zweites Basisspulensystem die Verbunderregerspule (41) und eine zweite Verbundempfängerspule (42b) und als ein drittes Basisspulensystem die Verbunderregerspule (41) und eine dritte Verbundempfängerspule (42c) sowie eine vierte Verbundempfängerspule (42d), eine fünfte Verbundempfängerspule (42e)und eine sechste Verbundempfängerspule (42f) und wobei die sechs Verbundempfängerspulen (42a-f) und die Verbunderregerspule (41) auf einem gemeinsamen Ferritkern (45) angeordnet sind.

13. Sensoranordnung nach Anspruch 12,
**dadurch gekennzeichnet, dass**
die sechs Verbundempfängerspulen (42a-f) den gleichen Abstand zur Verbunderregerspule (41) aufweisen und jeweils benachbarte Empfängerspulen (42a-f) im gleichen Abstand zueinander angeordnet sind.

14. Sensoranordnung nach einem der vorhergehenden Ansprüche,
**dadurch gekennzeichnet, dass**
der erste Differenzwinkel (α1) gleich dem zweiten Differenzwinkel (β1) ist, und insbesondere 45 Grad beträgt.

15. Sensoranordnung nach einem der vorhergehenden Ansprüche 1-13,
**dadurch gekennzeichnet, dass**
der erste Differenzwinkel (α1) und der zweite Differenzwinkel (β1) 60 Grad betragen.

16. Sensoranordnung nach einem der vorhergehenden Ansprüche 1-13,
**dadurch gekennzeichnet, dass**
der erste Differenzwinkel (α1) und der zweite Differenzwinkel (β1) 120 Grad betragen.

17. Sensoranordnung nach einem der vorhergehenden Ansprüche,
**dadurch gekennzeichnet, dass** zumindest eine Spulenachse umfasst ist, und wobei die Sensoranordnung in Bezug auf eine Oberfläche des Werkstückes so angeordnet ist, dass eine orthogonale Ausrichtung der Spulenachse zur Oberfläche des Werkstücks erreicht wird und wobei die Sensoranordnung zu dieser Oberfläche des ferromagnetischen Werkstücks (10) einen Nennabstand aufweist, wobei zumindest das erste Basisspulensystem (1,22a,32a,42a) und das zweite Basisspulensystem (2,22b,32b,42b)und das dritte Basisspulensystem (3,22c,32c,42c) untereinander einen Abstand von maximal 20% des Nennabstands aufweisen.

18. Sensoranordnung nach einem der vorhergehenden Ansprüche,
**dadurch gekennzeichnet, dass**
zumindest das erste Basisspulensystem (1,22a,32a,42a) als auch das zweite Basisspulensystem (2,22b,32b,42b) als auch das dritte Basisspulensystem (3,22c,32c,42c) an einer geeigneten Haltevorrichtung angeordnet sind.

19. Verfahren zur Bestimmung der mechanischen Oberflächenspannungen und/oder des Gefügezustandes eines ferromagnetischen Werkstücks durch die folgenden Schritte:
- Bestimmung von mindestens drei unabhängigen Messwerten durch eine Sensoranordnung nach einem der vorhergehenden Ansprüche 1-18,
- Ermittlung der richtungsabhängigen Permeabilität durch einen Rechenalgorithmus in einem bestimmten Messpunkt.

20. Verfahren nach Anspruch 19,
**dadurch gekennzeichnet, dass** mehrere Messpunkte des Werkstücks (10) bestimmt werden und daraus eine Bestimmung einer richtungsabhängigen Permeabilität ermöglicht wird, und so eine Kartierung des Eigenspannungstensors erfolgt.
